# EUROPEAN PATENT APPLICATION

(11) **EP 1 666 113 A1**
(43) Date of publication of application: **07.06.2006**
(21) Application number: 04738260.1
(22) Date of filing: 22.06.2004
(51) Int. Cl.: B01D 3/32, C10G 7/00

(54) **A HELICAL FRACTIONATING COLUMN**

(30) Priority: 26.07.2003 CN 03132999
(71) Applicant: XIE, Fusheng, District Linzi, Zibo, Shandong 255400 (CN)
(72) Inventor: XIE, Fusheng, District Linzi, Zibo, Shandong 255400 (CN)
(74) Representative: Altenburg, Udo
(86) International application number: PCT/CN2004/000662
(87) International publication number: WO 2005/009583

(57) **Abstract**

The present invention relates to a fractionating tower for oil product separation in oil refining industry. The spiral type fractionating tower comprises a tower body (8), which divided into three sections. The lower part is a jet pattern section, the middle part is a filler section, the upper part is a float valve section. The arrangement of the jet fins enables the gas to be refined moves spirally. The tower integrates with multi-functions of components separation, decolorization and deordorization.

## Description

### Technical Field of the Invention

The present invention relates to a spiral type fractionating tower, and particularly relates to an equipment used in the oil refining industry for separation of oil product.

### Background of the Invention

There are mainly two kinds of prior art fractionating tower, i.e. plate tower and filler tower. Prior art fractionating towers have simple function to separate oil product only, while the impurities contained in the oil product with abnormal color and odor have to be eliminated through a special decolorization and deodorization process and equipment. This becomes a particular problem, when waste plastic and waste rubber are utilized to refine oil product. In order to refine such oil product, complicated equipment and large investment are needed, therefore, the costs of production are relatively high. As matter of fact, there is no qualified oil product is really produced by prior art tower up to now.

### Summary of the Invention

The objective of the present invention is to overcome the drawbacks of the prior art by providing a spiral type fractionating tower which carries out multi-function of components separation of oil product as well as removal of the impurities in the oil product. In addition, the structure of the tower is simple and convenient for manufacture and maintenance.The tower may produce high quality product, especially for the refining industry utilizing waste plastic and waste rubber.

The present invention provides a spiral type fractionating tower, the body of the tower has three parts, the lower part is a jet pattern section, the middle part is a filler section, and the upper part is a float valve section.

There is at least one jet plate tray 3 fixed to the jet pattern section, and the preferred number of the trays is five in this invention. The jet plate tray 3 is a board with holes and with multiple jet fins 31 fixed to the surface of the board. Each jet fin 31 is inclined to the surface of the board, one end of the fin is fixed to the surface of the board, the other end of the fin points up away from the board. The angle between the fin and the board ranges from 20 to 60 degrees, and a range of 22.5 to 36 degrees is preferred in the invention. With respect to the fins fixed to the same tray, all angles between the fin and the board are approximately same. With respect to the fins fixed to the different trays, the angles between fin and the board increase gradually from the tray at the lower level to the upper level. The increment of the angle from tray to tray may be the same or not.

Multi-level of the jet plate trays may be chosen. The number of trays is determined according to specific requirements, and 1 to 5 levels of the trays are preferred in the invention. The multiple jet plate trays 3 are fixed to the body of the tower in the following manner. Each upper tray 3 to be fixed is rotated either in clockwise or counterclockwise for an angle with respect to the next lower tray 3 within a maximum range of 360 degrees. The angle of two neighbor trays 3 range from 20 to 60 degrees. In order to obtain a better adsorption effect, a coke adsorption layer can be laid on the jet plate tray 3.

Float valve trays 6 of the float valve section comprise a tray wall, spherical float valves 27, and an overflow weir 11. The overflow weir 11 is arranged at two ends of the float valve tray 6. The whole float valve tray 6 is divided into four areas: a float valve area located at the central area of tray 6, a liquid receiving area 28 located at one side of tray 6, a liquid declining area 30 located at another side of tray 6, and a bubbling area 29 located at two ends of the float valve area. The spherical float valves 27 are uniformly distributed in a triangular form in the float valve area. There are multiple float valve trays 6 according to this invention.. The preferred number of multiple float valve trays 6 is nine. Eight trays 6 are arranged upside of filler 15 and one tray 6 is arranged downside of filler 15. The filler section includes filler 15 and float valve trays 6 located upside and downside of the filler 15 respectively. The filler 15 is made of any one of regular filler, such as, any one of a metal pall ring, a wire net, a metal netted corrugated pattern or a metal puncture corrugated pattern.

In comparison with the prior art, The present invention has the following merits.

The jet pattern section is located at the lower part. The angle between the fin and the surface of the board gradually increases from the lowest tray to the highest tray, ranging from 20 to 60 degrees. The jet plate tray is arranged in a multi-level form. Each upper tray 3 to be fixed is rotated for an angle with respect to the next lower tray 3 within a maximum range of 360 degrees. The angles of two neighbor trays 3 range from 20 to 60 degrees. Thus a spiral motion of gas is formed. The traveling time and the distance of the gas flow in the tower body are prolonged, so as to produce a better adsorption effect. The filler section is arranged at the middle part of the tower. The filler performs further filtration of impurities contained in the gas.

The float valve section is arranged at the upper part. The float valves of the float valve tray of the float valve section are arranged in a triangular form, A karge number of float valves uniformly distributes gas and liquid, and provides a better fractionation effect owing to a larger contact area. The gas comes out of the jet pattern section and enters the filler section for adsorption filtering through the lowest float valve, and then enters the upper float valve section for further filtering and fractionation. The gas continues to ascend to the top of the tower where a quench cooler 21 is arranged. The quench cooler 21 produces convection between the gas returning to the top of the tower and the gas ascending to the upper part of the tower body. This may improve product quality, increase yield, purify products and reduce the occurrence of waste heavy oil. The spiral type fractionating tower has the following advantages: a gas phase medium spirally moves in the tower body, therefore the traveling time is longer, which can produce a better distillation effect; the spiral fractionating tower of this invention integrates with multi-functions of components for separation, decolorization and deordorization; the structure is simple, and it is convenient for manufacture and maintenance; investments are savable, the operating cost is lower, and the product quality is higher.

The present invention has eight drawings.
Fig. 1 is a schematic of front view showing the spiral type fractionating tower according to this invention;
Fig. 2 is a schematic A-A cutaway view taken from Fig. 1;
Fig. 3 is a schematic view showing triangular arrangement of the float valves according to this invention;
Fig. 4 is a schematic B-B cutaway view taken from Fig. 1;
Fig. 5 is a schematic view taken from Fig. 4, showing the jet fins 31 according to this invention;
Fig. 6 is a schematic C-C cutaway view taken from Fig. 5;
Fig. 7 is schematic view showing a reflux liquid dispenser at the top of the tower according to this invention;
Fig. 8 is a schematic view showing the angle of spraying by the reflux liquid dispenser shown in Fig. 7.

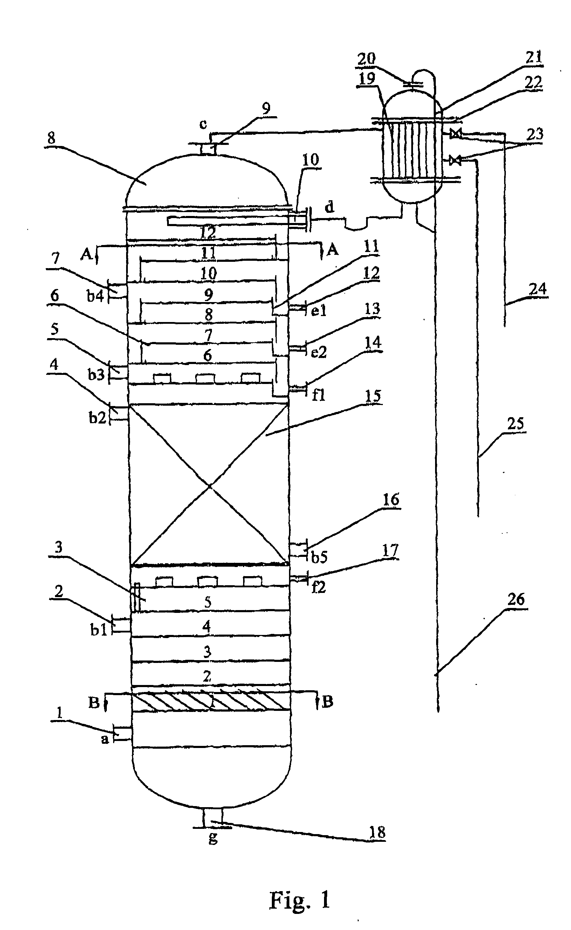

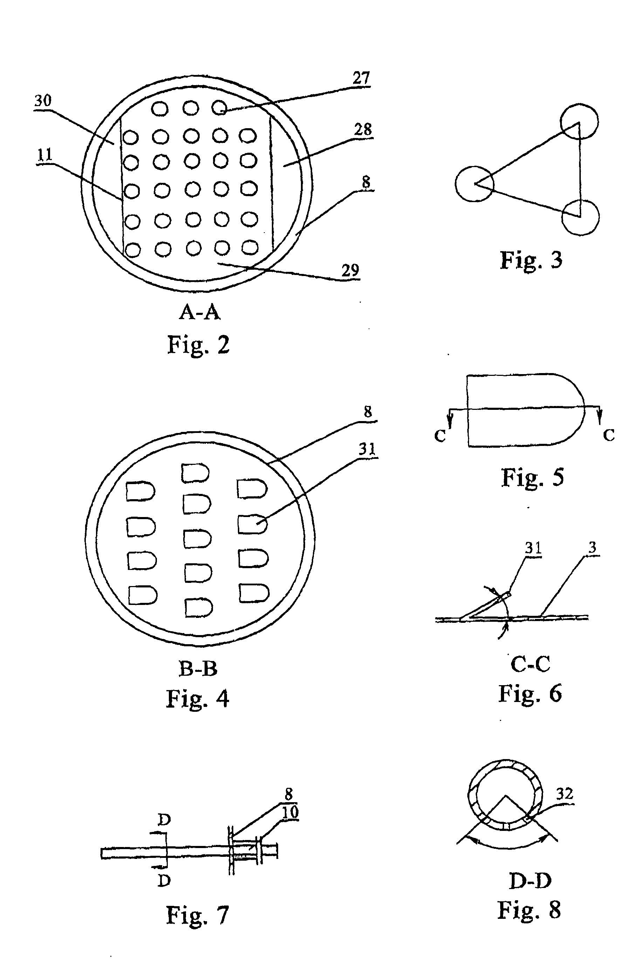

Fig. 1 to Fig. 8 show the embodiments of this invention, wherein:
1 (a) inlet of the spiral type fractionating tower connecting to the cracking kettle;
2(b₁), 4(b₂), 5(b₃), 7(b₄), 16(b₅) handhole;
3 jet plate tray; 6 float valve tray; 8 tower body;
9(c) gas phase outlet; 10 (d) reflux liquid dispenser;
11 overflow weir;
12 (e₁), 13(e₂) outlet of coal oil;
14 (f₁) 17(f₂) outlet of diesel oil;
15 metal pall ring; 18 (g) outlet of heavy oil;
19 cooling tube; 20, 22 flange; 21 quench cooler;
23 valve; 24 water outlet pipe; 25 water inlet pipe;
26 outlet of light weight gasoline; 27 float valve;
28 liquid receiving area; 29 bubbling area;
30 liquid declining area; 31 jet fin; and 32 spray hole.

### Preferred Embodiments

The present invention is described further in accompanying with drawings.

As shown in Fig.1 to Fig. 8, the spiral type fractionating tower is divided into three sections. The jet pattern section at the lower part has jet plate trays 3 with preferably five levels. Multiple jet fins are arranged dividedly on the jet plate tray 3. The jet plate tray 3 is a board with multiple jet fins 31 fixed to the surface of the board. Each jet fin 31 is inclined to the surface of the board, one end of the fin is fixed to the surface of the board, the other end of the fin points up away from the board. The angle between the fin and the board ranges from 20 to 60 degrees, and a range of 22.5 to 36 degrees is preferred in the invention. With respect to the fins fixed to the same tray, all angles between the fin and the board are approximately the same. With respect to the fins fixed to the different trays, the angles between fin and the board increase gradually from the tray at lower level to the tray at the upper level. The increment of the angle from tray to tray may be same or not.

Each upper tray 3 to be fixed is rotated for an angle of 20 to 60 degrees with respect to the next lower tray 3, and the angle reaches 360 degrees at the top level..A spiral gas channel is formed from the first to the fifth level along which gas flow ascends and spirally rotates. The angle of rotation, the angle between the fin and the board, the height of tower, and the space between two of the trays may be chosen upon specific requirements. In order to obtain a better adsorption effect, a coke adsorption layer can be laid on the jet plate tray. A coke adsorption layer of 100mm thickness is preferred in the invention. The jet plate trays 3 are arranged at the lower part of the tower body 8 and mainly serves as adsorption filtration, that is to say, heavy components is absorbed by the jet fins. When temperature continuously rises, the heavy components fall slowly and are distilled continuously in the tower. The produced gas spirally goes upward, and the impurities in the gas are adsorbed by the coke adsorption layer on each level of the tray. The traveling time and the traveling distance of the gas are prolonged, so that a better adsorption effect is achieved.

The filler section is arranged at the middle part, which includes a filler layer. Float valve trays 6 are located upside of and downside of the filler 15 respectively. The filler 15 is made of any one of regular filler, such as any one of metal pall ring, wire net, metal netted corrugated pattern or metal puncture corrugated pattern. The 25X25mm metal Pall ring is preferred in the invention. The filler arranged at the middle part mainly serves for filtration and performs filtration of impurities in gas.

The float valve section is arranged at the upper part of the tower. The float valve tray 6 of the float valve section comprises a tray wall, a spherical float valves 27, and an overflow weir 11. The overflow weir 11 is arranged at two ends of the float valve tray 6. The whole float valve tray 6 is divided into four areas: a float valve area located at central area of tray 6, a liquid receiving area 28 located at one side of tray 6, a liquid declining area 30 located at another side of tray 6, and a bubbling area 29 located at two ends of the float valve area. The spherical float valves 27 are uniformly distributed in a triangular form in the float valve area. There are multiple float valve trays 6 according to this invention. The preferable number of multiple float valve trays 6 is nine, including one located downside of filler 15 and eight located upside of the filler 15, The liquid product enters the liquid receiving area, and enters the overflow weir when the float valve area is full, and further enters the liquid declining area, and then enters the next liquid receiving area at the lower level. The float valve tray arranged at the upper part serves for fractionation. The float valves are arranged in a triangular form and uniformly distributed for gas and liquid. For the gas or the liquid, a better fractionation effect can be obtained owing to a bigger contact area. After adsorption filtration through the jet plate tray and the filler section, gas continues to go upward and is fractionated by the float valve tray with a better fractionation effect.

The quench cooler 21 arranged at the top of the tower is tank-like and comprises a water inlet pipe 25, a water outlet pipe 24, two valves 23 and a cooling pipe between the valves 23. An outlet of light weight gasoline is arranged at the top of the quench cooler 21 and above the bottom of the quench cooler 21 respectively. A U shaped reflux pipe connected to a refluxing liquid dispenser 10 (d) located at the top of the tower body 8 is arranged at the bottom of the quench cooler 21. The front end of the refluxing liquid dispenser 10(d) is tubular. Multiple spray holes 32 are arranged at the bottom of the refluxing liquid dispenser and arranged in a manner that three sprinkle holes 32 are uniformly distributed within 60 degrees in a circular section, and these spray holes 32 form three rows laterally on the refluxing liquid dispenser. An inlet 1 (a) connecting with a cracking kettle, and handholes 2 (b₁), 4 (b₂), 5 (b₃), 7 (b₄), 16 (b₅) are arranged at one side of the tower body 8. Outlets of coal oil 12 (e₁), 13(e₂) and outlets of diesel oil 14 (f₁) 17(f₂) are arranged at another side of the tower body 8. A gas phase outlet 9(c) is arranged at the top of the tower. A heavy oil outlet 18(g) is connected to a sediment drum through a flange and an outlet of sediment drum is connected to the cracking kettle through pipes and valves. The quench cooler 21 is arranged above the top of the tower, which enables convection between the gas returning the top of the tower and the ascending gas at the upper part of the tower body. Thus, the product quality can be improved, and the occurrence of waste heavy oil can be reduced. The arrangement of the sediment drum enables to recover sediment and conveys it to the cracking kettle,

In order to further improve product quality and yield, one or two more quench coolers same as the quench cooler 21 can be arranged at the sides of middle part and/or lower part of the tower body 8. In addition, a preheated device can be arranged outside the tower body. Solar energy or boilers can be used as heat source for heating the tower body.

The operating principle and the process of the spiral type fractionating tower of this invention are as follows: the gas which comes out of the cracking kettle goes into the bottom of the tower body through valve 1 (a); then the gas passes through the jet plate tray 3; then the gas spirally moves upward from the lowest level 1 to the highest level 5, since the jet fins 31 located in different levels of the jet plate trays 3 are staggered with each other; then the gas passes through the filler for filtration; then the gas passes through float valve trays; then the gas passes through the gas phase outlet 9(c) at the top of the tower; then the gas goes into to the quench cooler 21; then the unqualified products returns to the tower body via the refluxing liquid dispenser 10 from the bottom of the quench cooler 21; the qualified light components ascends after gas-liquid exchange and light gasoline output goes to gasoline outlet; the heavy components goes to the outlet of coal oil 12 (e₁) and 13(e₂) as well as outlet of diesel oil 14 (f₁) and 17(f₂); the sediment goes to the sediment drum via the heavy oil outlet 18 (g) and returns the cracking kettle through pipes and valves. Thus a cyclic process is formed.

In comparison with the prior art, The spiral type fractionating tower has the following merits. The gas phase medium moves spirally in the tower body and residence time of the gas is longer, which can produce a better distillation effect; the spiral fractionating tower is integrated with functions of components separation, decolorization and deordorization; the structure is simple, and it is convenient for manufacture and maintenance; investments are savable, the operating cost is lower, and the product quality is higher. The spiral fractionating tower has popularization value in oil refining industry utilizing waste plastics and waste rubber.

## Claims

1. A spiral type fractionating tower comprising a tower body (8), **characterized in that** the tower body (8) has three sections, a lower part is a jet pattern section, a middle part is a filler section, and a upper part is a float valve section.

2. A spiral type fractionating tower according to claim 1, **characterized in that** said jet pattern section arranged at the lower part comprises jet plate trays (3); said filler section comprises a filler (15) and float valve trays (6) with one tray (6) located downside of the filler (15) and with other trays (6) located upside of the filler (15)..

3. A spiral type fractionating tower according to claim 2, **characterized in that** said jet plate tray (3) is a board with holes and with multiple jet fins (31) fixed to the surface of the board, each jet fin (31) is inclined to the surface of the board, one end of the fin (31) is fixed to the surface of the board, the other end of the fin points up away from the board, the angle between the fin and the board ranges from 20 to 60 degrees, with respect to the fins fixed to the same tray, all angles between the fin and the board are approximately same, with respect to the fins fixed to the different trays, the angles between fin and the board increase gradually from the tray at the lower level to the upper level.

4. A spiral type fractionating tower according to claim 2, **characterized in that** said jet plate tray (3) is arranged in a multil-evel form of five levels; each upper tray (3) to be fixed is rotated for an angle within 20 to 60 degrees with respect to the next lower tray 3.

5. A spiral type fractionating tower according to claim 3 or 4, **characterized in that** a coke adsorption layer is laid on said jet plate trays (3).

6. A spiral type fractionating tower according to claim 2, **characterized in that** float valve trays (6) comprise a tray wall, spherical float valves (27), and an overflow weir (11) which is arranged at two ends of the float valve tray (6); the whole float valve tray (6) is divided into four areas: a float valve area at central area, a liquid receiving area (28) at one side, a liquid drop area (30) at another side, and a bubbling area (29) arranged at two ends of said float valve area; said spherical float valves (27) are uniformly distributed in a triangular form in the float valve area.

7. A spiral type fractionating tower according to claim 2 or 6, **characterized in that** one of float valve trays (6) are arranged downside of the filler (15) and eight of float valve trays (6) are arranged upside of the filler (15).

8. A spiral type fractionating tower according to claim 2, **characterized in that** filler (15) is made of any one of metal pall ring, wire net, metal netted corrugated pattern or metal puncture corrugated pattern

9. A spiral type fractionating tower according to claim 1, **characterized in that** a quench cooler (21) is tank-like and comprises a water inlet pipe (25), a water outlet pipe (24), two valves (23) and a middle cooling pipe (19); an outlet of light weight gasoline (26) are arranged at the top and above the bottom of the quench cooler (21) respectively; a U shaped reflux pipe connected to a refluxing liquid dispenser 10 (d) located at the top of the tower body (8) is arranged at the bottom of the quench cooler (21)

10. A spiral type fractionating tower according to claim 1 or 9, **characterized in that** an inlet of the spiral type fractionating tower connecting to the cracking kettle (1) is arranged at one side of the tower body (8), and coal oil output pipes (12), (13) as wll as diesel oil output pipes (14), (17) are arranged at another side; the bottom of the tower is connected to a sediment drum through a flange; sediment returns to the cracking kettle through pipes and valves
